# EUROPÄISCHE PATENTSCHRIFT

(11) **EP 1 086 615 B1**
(45) Veröffentlichungstag und Bekanntmachung des Hinweises auf die Patenterteilung: **28.07.2004**
(21) Anmeldenummer: 00118455.5
(22) Anmeldetag: 25.08.2000
(51) Int. Cl.: A01B 35/22, A01B 61/04

(54) **Halterungsanordnung**
Connecting arrangement
Arrangement de fixation

(30) Priorität: 10.09.1999 US 393531
(43) Veröffentlichungstag der Anmeldung: 28.03.2001
(73) Patentinhaber: DEERE & COMPANY, Moline, Illinois 61265-8098 (US)
(72) Erfinder: Hook, Richard Wayne, West Des Moines, IA 50265 (US); Zaun, Richard David, West Des Moines, IA 50265 (US)
(74) Vertreter: Holst, Sönke, Dr.

(56) Entgegenhaltungen:
- GB-A- 175 736
- GB-A- 269 394
- US-A- 3 493 055
- US-A- 3 565 180
- US-A- 5 787 992

## Beschreibung

Die Erfindung betrifft eine Halterungsanordnung, die zur Befestigung an einem Werkzeugträger und zur Halterung eines Bodenbearbeitungswerkzeugs eingerichtet ist, mit einer Klammer, die durch eine Klammeranordnung an dem Werkzeugträger befestigbar ist, einem an der Klammer gelagerten und gegen die Kraft einer Feder aus einer Bodenbearbeitungsposition in eine Ausweichposition nach oben schwenkbaren Schaft bzw. Halterung des Schafts, der mit dem Bodenbearbeitungswerkzeug verbindbar ist, wobei die Feder beim Verschwenken des Schafts in die Ausweichposition in einen zusammengedrückten Zustand verbracht wird, und einem oberen Anschlag, der eine Bewegung des Schafts nach oben in die Ausweichposition begrenzt und ein Zusammendrücken der Feder über ihren zusammengedrückten Zustand hinaus verhindert, um eine dauerhafte Verformung der Feder zu vermeiden, wenn Hindernissen begegnet wird.

Halterungsanordnungen mit Federn umfassen in der Regel eine an einem Werkzeugträger mit rechteckigem Querschnitt angebrachte Befestigungs-Klammer, die sich nach hinten und oben zu einer nach unten und vorn gerichteten Federanlagefläche erstreckt. Eine Feder wird zwischen der Federanlagefläche und einer nach oben gerichteten Federanlagefläche eines schwenkbar am unteren Abschnitt der Klammer angelenkten Elements zusammengedrückt. Ein Werkzeug tragender Schaft ist an diesem Element befestigt. Ein Spannungsverbindungszusammenbau erstreckt sich von dem mit dem Schaft verbundenen Element durch die Feder und durch eine Öffnung in der Federanlagefläche der Klammer, um die Vorspannung der Feder einzustellen und die vertikale Position des am Schaft befestigten Bodenbearbeitungswerkzeugs einzustellen. Eine derartige Halterungsanordnung ist beispielsweise in der US 3 700 039 A dargestellt. Diese Halterungsanordnung stellt gute Kraft-Weg-Charakteristiken bereit, hat jedoch eine Vielzahl an Teilen und ist teuer und zeitaufwendig beim Zusammensetzen und bei der Reparatur. Die bisher erhältlichen Halterungsanordnungen, insbesondere solche mit vielen Spannungsverbindungen oder Federauflagekomponenten, wie Stiften, Bügeln, Abstands- oder Unterlegscheiben, erfordern typischerweise ausführliche Anleitungen zum Zusammenbau und Zerlegen.

Bei einigen Halterungszusammenbauten vermindern die Spannungsübertragungszusammenbauten in der Ruheposition die Kräfte auf den Schwenkbereich, was etwas Spiel der Schwenklagerung bedingt, das häufig als Qualitätsnachteil angesehen wird und dazu führt, dass sich das Bodenbearbeitungswerkzeug beim Arbeitsvorgang seitlich bewegt. Die Vorspannung der Feder in der normalen Arbeitsposition ist häufig nicht hinreichend, um fortdauerndes Ausweichen der Feder zu unterbinden. Der sich durch die Öffnung erstreckende Teil der Spannungsübertragungselemente nutzt durch diese Bewegungen ab. Bei manchen gefederten Halterungszusammenbauten, wie sie beispielsweise aus der US 4 520 878 A bekannt sind, ruht die Unterseite der Spiralfeder auf einem Sitz, der schwenken kann, um das untere Ende der Feder im wesentlichen senkrecht zu ihrer Längsachse zu halten und Verbiegungskräfte zu vermeiden. Bei einem anderen Typ eines Halterungszusammenbaus, der in der US 3 700 039 gezeigt ist, hat das untere Ende der Feder die Freiheit, auf einem Klemmbolzen zu schwenken, so dass es senkrecht zur Mittellinie der Feder orientiert bleibt. Diese Zusammenbauten bringen zusätzliche Verschleißteile in die Halterung mit ein.

In der auf dieselbe Anmelderin zurückgehenden DE 19956953 A wird ein mit Feder ausgestatteter Halterungszusammenbau beschrieben, der keine Spannungsübertragung erfordert. In der ebenfalls auf die Anmelderin zurückgehenden US-Patentanmeldung 09/325454 vom 3. Juni 1999 (EP 1057394 A) ist eine Lagerungsanordnung für eine Feder beschrieben, die eingerichtet ist, eine im wesentlichen senkrechte Ausrichtung der untersten Windung der Feder relativ zur Mittellinie der Feder sowohl in der Feldarbeitsposition als auch in der Ausweichposition bereitzustellen, so dass eine seitliche Verformung der Feder und eine durch Verformung der Feder bedingte Ermüdung vermindert sind. Ein oberer Anschlag für den Schaft wird durch die Feder bereitgestellt, wenn die Windungen der Feder sich gegenseitig berühren. Wenn ein Schaft nach oben über ein großes Hindernis in die weitestmögliche Ausweichposition ausweicht, kann die auf die vollständig zusammengedrückte Feder wirkende Kraft, sogar wenn sie korrekt zwischen den Federanlageflächen am Halterungszusammenbau ausgerichtet ist, so groß sein, dass die Windungen der Feder aneinander vorbeirutschen, was eine dauerhafte Verformung der Feder und einen Verlust der normalen Federcharakteristiken zur Folge hat.

In der GB 175 736 A wird ein Kultivator mit einem Zinken beschrieben, der um eine horizontale, quer verlaufende Schwenkachse an der Maschine angelenkt ist. Der Zinken erstreckt sich von der Schwenkachse nach unten und in Bewegungsrichtung der Maschine nach vorn. Er wird durch eine Feder nach oben und vorn vorgespannt. Wenn er auf ein Hindernis trifft, bewegt es sich gegen die Kraft der Feder nach hinten und unten, um unter das Hindernis zu gelangen und es zu entfernen. Der Schwenkbereich des Zinken ist durch verstellbare Anschläge begrenzt.

In der US 3 493 055 A wird eine Halterungsanordnung für ein Bodenbearbeitungsgerät beschrieben. Der das Werkzeug tragende Schaft ist schwenkbar an einer Klammer befestigt, die durch einen U-Bolzen an einem Werkzeugträger fixiert ist. Eine Feder drückt das Werkzeug nach unten. Der Bewegungsbereich des Werkzeugs nach oben ist durch eine Fläche des Schafts begrenzt, der am U-Bolzen anschlägt. Hier ist als nachteilig anzusehen, dass sich der U-Bolzen durch den anschlagenden Schaft mit der Zeit verformt.

Das der Erfindung zugrunde liegende Problem wird darin gesehen, eine verbesserte Halterungsanordnung bereitzustellen, bei der die genannten Probleme nicht auftreten.

Dieses Problem wird erfindungsgemäß durch die Lehre des Patentanspruchs 1 gelöst, wobei in den weiteren Patentansprüchen Merkmale aufgeführt sind, die die Lösung in vorteilhafter Weise weiterentwickeln.

Der sich mit dem Schaft bewegende obere Anschlag schlägt am Werkzeugträger oder einer von der Klammeranordnung, mit der die Klammer am Werkzeugträger befestigt ist, beabstandeten Fläche der Klammer an.

Auf diese Weise erhält man eine Halterungsanordnung, bei der die Feder gegen beschädigende Kräfte geschützt ist, wenn der Schaft beim Auftreffen auf Hindernisse in die Grenzposition ausweicht. Somit ist die Feder gegen dauerhafte Verformungen geschützt, wenn große Ausweichkräfte auftreten. Die Halterungsanordnung weist weniger Teile auf und ist preiswerter als die meisten vorbekannten Halterungsanordnungen. Sie weist wenige Verschleißteile auf, die außerdem leicht ersetzt werden können und kann unproblematisch zerlegt und wieder zusammengesetzt werden.

Vorzugsweise ist der Schaft an einer Halterung befestigt oder mit ihr einteilig hergestellt. Die Halterung ist an einem Schwenkpunkt angelenkt, um den der Schaft beim Weg von der normalen Bodenbearbeitungsposition in die Ausweichposition rotiert. Die Halterung ist vorzugsweise in Form eines Gussteils hergestellt.

In der Regel weist die Halterungsanordnung eine zur Befestigung dienende Klammer auf, die an dem Werkzeugträger befestigt wird. Außerdem ist eine in der Regel spiralförmige Feder vorgesehen, die zwischen einer oberen, an der Feder anliegenden Fläche an der Klammer und einer unteren an der Feder anliegenden Fläche an der Halterung des Schafts (bzw. dem Schaft selbst) eingeklemmt ist. Die Halterung des Schafts ist an der Klammer mittels einer Schwenklagerung drehbar gelagert, deren Schwenkachse quer zur Vorwärtsrichtung verläuft. Ein werkzeugtragender bzw. mit dem Bodenbearbeitungswerkzeug verbindbarer Schaft ist in der Regel an der Halterung angeschraubt und durch die Feder nach unten in eine Bodenbearbeitungsposition vorgespannt. Die Halterung kann an der unteren, an der Feder anliegenden Fläche einen die Feder aufnehmenden Vorsprung aufweisen, um die Unterseite der Feder in Position zu halten. Der Vorsprung kann geschlitzt sein, um ein einfaches Werkzeug zum Zusammendrücken der Feder aufzunehmen, so dass die Feder zusammengedrückt werden kann, um die Halterungsanordnung zu zerlegen und wieder zusammenzubauen.

Die Halterung des Schafts (bzw. der Schaft) weist vorzugsweise einen integrierten, sich vom Schwenkpunkt nach vorn erstreckenden unteren Anschlag auf. Dieser Anschlag berührt den Boden der Klammer, wenn sich der Schaft in der Bodenbearbeitungsposition befindet, so dass eine (sich ansonsten in der Regel durch die Feder erstreckende) Spannungsübertragung zwischen Klammer und Halterung des Schafts zur Definition der Bodenbearbeitungsposition des Schafts entfallen kann.

Die Halterung des Schafts weist vorzugsweise eine an der Feder anliegende Fläche auf, die einen ersten Abschnitt umfasst, der sich im wesentlichen senkrecht zur Achse der Feder erstreckt, wenn sich der Schaft in der normalen Bodenbearbeitungsposition am Anschlag befindet, um das untere Ende der Feder abzustützen. Die gegenüberliegende Seite der an der Feder anliegenden Fläche ist relativ zur ersten Fläche im Winkel angeordnet und liegt in der Ausweichposition an der untersten Windung der zusammengedrückten Windungen der Feder an, um die Feder in einem im wesentlichen nicht verformten Zustand zu halten. Eine näherungsweise senkrechte Ausrichtung der unteren Windungen der Feder relativ zur Mittellinie der spiralförmigen Feder ist sowohl in der Bodenbearbeitungsposition aus auch in der Ausweichposition aufrechterhalten, so dass Federverbiegungskräfte und Ermüdungen der Feder vermindert oder vermieden werden. Die Kombination der an der Feder anliegenden Flächen und des oberen Anschlags stellen eine effektive und effiziente ausweichende Halterungsanordnung bereit. Wenn der Schaft große Ausweichkräfte erfährt, wird die Feder durch den oberen Anschlag vor Verformung und Bruch geschützt. Wenn Ausweichkraftgrenzen überschritten werden, kann der Schaft knicken oder brechen, aber die Feder ist geschützt. Da der Schaft gewöhnlich leichter und schneller ersetzbar ist als eine Feder, ist die Ausfallzeit durch die erfindungsgemäße Halterungsanordnung vermindert.

Auch der obere Anschlag kann - wie auch der untere Anschlag - in die Halterung des Schafts integriert sein. Insbesondere kann die Halterung gegenüberliegende Seiten aufweisen, die Anschläge definieren, die an rückwärtigen Kanten der sich nach hinten öffnenden, kanalförmigen Klammer anliegen, wenn die weitestmögliche Ausweichposition erreicht ist. Der ausgedehnte Kontakt zwischen den Schultern und den rückwärtigen Kanten stellt einen starken, zwangsweisen Anschlag bereit. Sowohl die Funktion des oberen als auch die des unteren Anschlags wird durch die einteilige Halterung bereitgestellt.

In einer anderen Ausführungsform berührt ein von der Rückseite der Halterung nach oben überstehendes Element den Werkzeugträger des Arbeitsgeräts, um ein Verschwenken der Halterung nach oben zu begrenzen, so dass die Feder nicht in einen übermäßig zusammengedrückten Zustand gezwungen wird.

Als Schwenklagerung für die Halterung des Schafts kann eine abnehmbare Lagerung Verwendung finden, die insbesondere in Form einer Hülse und einer sie umschließenden Muffe ausgestaltet sein kann. Eine relativ hohe Ausweichkraft vermeidet ein unerwünschtes Ausweichen des Schafts in der Lagerung und verhindert ein Spiel des Schafts, so dass die gewünschte Position des Bodenbearbeitungswerkzeugs in Vorwärtsrichtung und seitlicher Richtung zur Erreichung maximaler Effizienz aufrechterhalten wird. Eine Abnutzung findet daher nur in den Komponenten der relativ preisgünstigen Lagerung statt, und diese Komponenten können leicht mit Hilfe des oben genannten Werkzeugs ersetzt werden, wobei das Werkzeug benutzt wird, die Feder zusammenzudrücken und die Belastung von der Schwenklagerung zu entfernen, ohne ein komplettes Zerlegen der Halterungsanordnung. Wenn aus irgendeinem Grund ein völliges Zerlegen erforderlich wird, erlaubt das Werkzeug eine gänzliche Entspannung der Feder. Die Halterungsanordnung hat eine minimale Anzahl an Komponenten und ist relativ preiswert und leicht zusammenbaubar.

In den Zeichnungen sind zwei nachfolgend näher beschriebene Ausführungsbeispiele der Erfindung dargestellt. Es zeigt:
- Fig. 1: eine Seitenansicht eines Halterungszusammenbaus, in der der Schaft in der normalen Bodeneingriffsposition (durchgezogene Linien) und in der Ausweichposition (gestrichelte Linien) gezeigt ist,
- Fig. 2: eine vergrößerte Seitenansicht der Halterung des Schafts des Halterungszusammenbaus der Figur 1,
- Fig. 3: eine vergrößerte Seitenansicht der Halterung des Schafts aus Figuren 1 und 2,
- Fig. 4: eine Draufsicht auf die Halterung des Schafts der Figur 3, und
- Fig. 5: eine ähnliche Ansicht wie in Figur 2, in der jedoch eine alternative Ausführungsform des oberen Anschlags wiedergegeben ist.

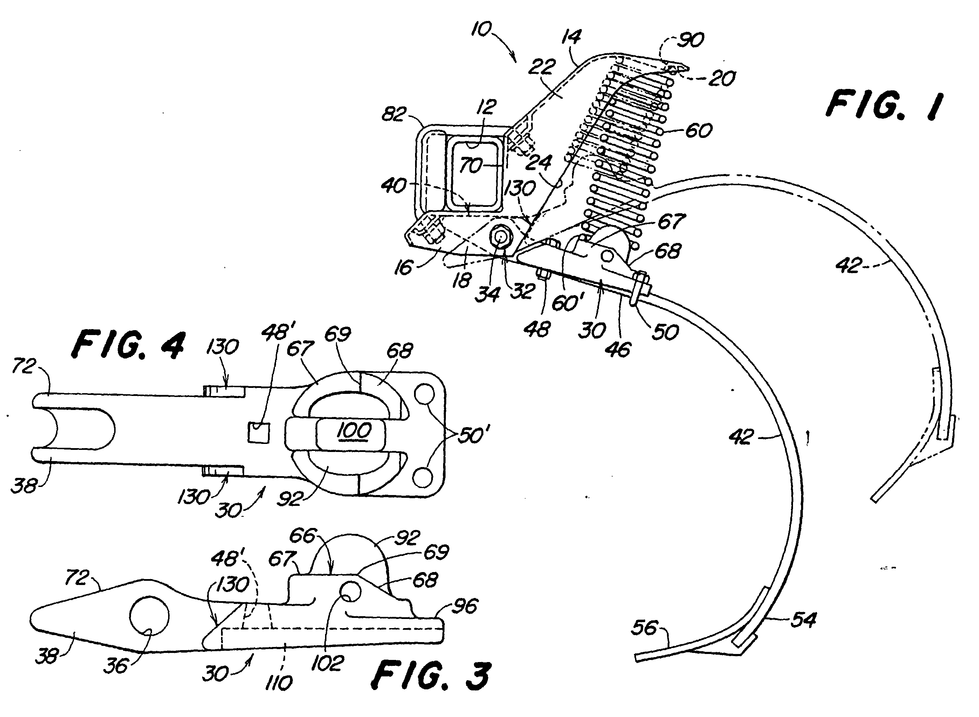

In Figur 1 ist ein Zusammenbau 10 einer mit einer Feder versehenen Halterungsanordnung eines Bodenbearbeitungsgeräts dargestellt, die mit einem sich quer erstreckenden Werkzeugträger 12 rechteckigen Querschnitts für Arbeitsgeräte verbunden ist. Der Zusammenbau 10 umfasst eine sich rückwärtig öffnende, kanalförmige Klammer 14 mit einem vorderen Befestigungsabschnitt 16, einem unteren hinteren Schwenkbereich 18 und einer oberen, an einer Feder 60 anliegenden Oberfläche 20, die rückwärtig und oberhalb des Schwenkbereichs 18 angeordnet ist. Die Klammer 14 umfasst senkrechte Seitenabschnitte 22, die in senkrechten Kanten 24 enden, welche sich zwischen dem Schwenkbereich 18 und der Oberfläche 20 erstrecken.

Eine Halterung des Schafts in Form eines Gussteil 30 ist mit dem hinteren Schwenkbereich 18 durch einen eine Hülse und Muffe umfassenden Zusammenbau 32, der einen Befestigungsbolzen 34 mit verchromter Hülse aus Stahl umfasst, die sich durch eine Bohrung 36 (Figur 3) im Gussteil 30 zwischen den Seiten der Klammer 14 unterhalb der vorderseitigen, untersten Ecke des Befestigungsabschnitts 16 und vor den Kanten 24 erstreckt, schwenkbar verbunden. Das Gussteil 30 umfasst eine sich von vorn nach hinten erstreckende Verlängerung 38, die von der Bohrung 36 und dem Schwenkbereich 18 nach vorn unter den Befestigungsabschnitt 16 vorspringt und einen insgesamt mit dem Bezugszeichen 40 gekennzeichneten unteren Anschlagbereich definiert, der ein Schwenken (des Gussteils 30) nach unten (in Figur 1 in Uhrzeigerrichtung) begrenzt, um eine vorausgewählte Bodeneingriffsposition, wie sie in Figur 1 in durchgezogenen Linien gezeigt ist, herzustellen. Die Verlängerung 38 hat eine Breite, die näherungsweise gleich mit dem - jedoch geringfügig geringer als der - Abstand zwischen den Seitenabschnitten 22 ist.

Ein C-förmiger Schaft 42 umfasst ein mit einer Öffnung versehenes oberes Ende 46, das durch eine Schraube 48 an dem Gussteil 30 befestigt ist. Die Schraube 48 erstreckt sich durch das obere Ende 46 und durch ein Loch 48' (Figur 3) im Gussteil 30. Ein U-förmiger Bolzen 50, der sich um den Schaft 42 und durch Löcher 50' im Gussteil 30 erstreckt, befestigt das obere Ende 46 am hinteren Ende des Gussteils 30. Der Schaft 42 verläuft vom oberen Ende 46 kurvenförmig nach unten und vorn zu einem untersten, zur Aufnahme eines Bodenbearbeitungswerkzeugs dienenden Ende 54, das ein Bodenbearbeitungswerkzeug oder eine Schaufel 56 trägt.

Eine spiralförmige Feder 60 ist frei zwischen der oberen, an der Feder 60 anliegenden ersten Fläche 20 und einer unteren, an der Feder 60 anliegenden Fläche 66 des Gussteils 30 ohne eine Spannverbindung oder Federführungsstruktur innerhalb der Windungen der Spule zusammengedrückt. Die Feder 60 ist vorkomprimiert, um eine Federkraft bereitzustellen, mit der ein Bodenbearbeitungswerkzeug in der Arbeitsposition zu beaufschlagen ist, wobei der Anschlagbereich 40 sich am Anschlag befindet, wie in Figur 1 mit durchgezogenen Linien dargestellt ist. Die Bodenbearbeitungsposition des Zusammenbaus 10 mit am Anschlag liegenden Anschlagsbereich 40 stellt eine optimale Arbeitsposition bereit, um den Boden zu durchstreichen. Die Vorspannung der Feder 60 in Verbindung mit der Wirkung des unteren Anschlagbereichs 40 beaufschlagt die Schwenklagerung, um Spiel im Hülse und Muffe aufweisenden Zusammenbau 32 zu vermeiden. Die an der Feder 60 anliegende Fläche 66 umfasst eine ersten die Feder 60 aufnehmenden Bereich oder eine Oberfläche 67, der oder die im wesentlichen parallel zur oberen, an der Feder 60 anliegenden Fläche 20 ist und die unterste Windung (60') der Feder 60 abstützt, wenn sich der Schaft 42 in der Bodenbearbeitungsposition befindet und einen zweiten, die Feder 60 aufnehmenden Bereich oder eine Oberfläche 68, der oder die im wesentlichen parallel zur Oberfläche 20 sind und die Windung 60' abstützt, wenn der Schaft 42 sich der obersten, aus der Normalposition verschwenkten (Ausweich-) Position nähert (gestrichelte Linien in Figur 1). Die versetzten Bereiche 67, 68 sind durch einen Übergangsbereich 69 verbunden und verhindern ein übermäßiges Verbiegen der Feder 60, indem die unterste Windung 60' sowohl in der Bodenbearbeitungsposition als auch in der Ausweichposition senkrecht zur Mittellinie der Feder 60 gehalten wird.

Die kanalförmige Klammer 14 umfasst einen ausgesparten Bereich 70, der an den rückseitigen und unteren Flächen des Werkzeugträgers 12 anliegt. Der Schwenkbereich 18 ist unterhalb des rückwärtigen Abschnitts des ausgesparten Bereichs 70 angeordnet, und der Anschlagbereich 40 umfasst eine Klammerfläche 72 mit einer oberen Seite, die an der unteren Fläche des Werkzeugträgers 12 anliegt, um einen festen Anschlag für die Verlängerung 38 des Gussteils 30 bereitzustellen. Eine konventionelle Klammeranordnung 82 mit einem U-förmigen Bolzen erstreckt sich um den Werkzeugträger 12 und durch Öffnungen in der Klammer 14, um den Zusammenbau 10 am Werkzeugträger 12 zu befestigen.

Die obere, an der Feder 60 anliegende Oberfläche 20 der Klammer 14 umfasst eine kreisförmige Einpressung oder einen nach unten gerichteten Vorsprung 90, um das obere Ende der spiralförmigen Feder 60 an der Fläche 20 zentriert zu halten. Ein unterer, die Feder 60 halternder Vorsprung 92 erstreckt sich in der Nähe der Flächen 67 und 68 am Gussteil 30 von einer Basis 96 nach oben, um das Positionieren der Feder 60 relativ zur an der Feder 60 anliegenden Fläche 66 zu erleichtern. Die Basis 96 und der Vorsprung 92 sind geschlitzt, um eine sich von vorn nach hinten erstreckende Aussparung 100 zu definieren, die den Zusammenbau in der Fabrik erleichtert. Eine quer verlaufende Bohrung 102 erstreckt sich durch die Basis 96. Die Aussparung 100 und die Bohrung 102 erleichtern das Zerlegen und Zusammensetzen auf dem Feld, wenn nötig. Die Unterseite des Gussteils 30 umfasst einen sich von vorn nach hinten erstreckenden Hohlraum 110 (Figur 2), der sich nach hinten und unten öffnet und im wesentlichen der Form des oberen Endes 46 des Schaftes 42 entspricht. Eine dünne, gehärtete und geschlitzte Muffe ist in die Bohrung 36 gepresst und nimmt die verchromte Hülse aus Stahl und den Befestigungsbolzen 34 auf. Der Befestigungsbolzen 34 ist an den Seiten der Klammer 14 festgezogen und klemmt die Hülse aus Stahl ein, so dass die geschlitzte Muffe sich auf der stationären Hülse dreht. Daher entsteht der einzige im Schwenkbereich 18 auftretende Verschleiß an der Muffe und der Hülse aus Stahl, die relativ billig und leicht ersetzbar sind. Durch das Weglassen einer schwenkbaren unteren Klammer oder eines die unterste Windung der Feder tragenden Stiftes, und durch das Verwenden der unteren, an der Feder 60 anliegenden Fläche 66 aus mehreren Bereichen 67, 68, um die unterste Windung 60' sowohl in der normalen Bodenbearbeitungsposition als auch in der Ausweichposition senkrecht zur Mittellinie der Feder 60 zu halten, ist ein weiterer potentieller Verschleißbereich vermieden.

Um das Schwenken des Gussteils 30 nach oben in eine Position, in der die Feder 60 sich einem vollständig zusammengedrückten Zustand nähert oder sich darin befindet, zu begrenzen, ohne dass eine dauerhafte Verformung der Feder 60 auftritt, ist ein zweiter oder oberer Anschlag vorgesehen. Wie in den Figuren 1 bis 4 gezeigt wird, umfasst das Gussteil 30 Kontaktflächen 130, die hinter dem Schwenkbereich 18 vorgesehen sind und Anschläge definieren. Der Abstand zwischen den Kontaktflächen ist größer als der Abstand zwischen den Seitenabschnitten 22. Die Kontaktflächen 130 sind vorzugsweise im wesentlichen ebene Oberflächen, die in die rückwärtige Richtung nach oben abgewinkelt sind, parallel zu den Kanten 23 des unteren Bereichs der Klammer 24 verlaufen und vollständig an ihnen anliegen, um ein weiteres Verschwenken des Gussteils 30 nach oben zu unterbinden, wenn es sich in der in Figur 1 und 2 in gestrichelten Linien wiedergegebenen Position befindet. In der am weitesten nach oben verschwenkten Position des Gussteils 30, in der die Kontaktflächen 130 an den Kanten 24 anliegen, ist die Feder 60 in oder nahe ihrem völlig zusammengedrückten Zustand, aber noch nicht in dem zusammengedrückten Zustand, in dem die Windungen anfangen, aneinander vorbeizugleiten und eine dauerhafte Verformung der Feder bedingen. Außerdem ist die Oberfläche 66 parallel zur Oberfläche 20, so dass Federverbiegungskräfte in der vollständig ausgewichenen Position des Schafts 42 minimiert sind.

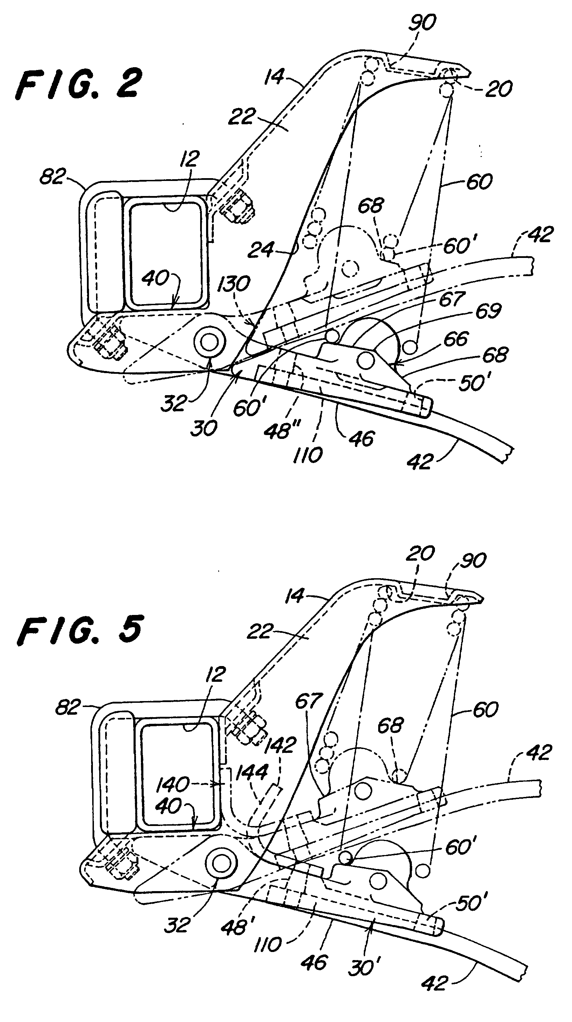

In der in Figur 5 wiedergegebenen alternativen Ausführungsform umfasst ein oberer Anschlag 140 einen Winkel 142, der an der Stelle des Lochs 48' durch die (in Figur 5 entfernte) Schraube 48 befestigt ist. Der Winkel 142 hat ein nach oben ragendes Bein 144, das die Rückseite des Werkzeugträgers 12 in der vollständig ausgewichenen Position des Schafts 42 (gestrichelte Linien in Figur 5) berührt, um ein weiteres Verschwenken des Gussteils 30 zu vermeiden.

Im Betrieb arbeitet der Schaft 42 normalerweise in der in den Figuren 1, 2 und 5 durch durchgezogene Linien dargestellten Bodenbearbeitungsposition. Die unterste Windung 60' der Feder 60 ruht auf der vorderen Oberfläche 67, die im wesentlichen parallel zur oberen, an der Feder 60 anliegenden Oberfläche 20 ist, so dass die Feder 60 in ihrer vorgespannten Bodenbearbeitungsposition (durchgezogene Linien in Figur 1) faktisch keine Verbiegungskräfte erfährt. Wenn das Werkzeug 56 auf ein Hindernis trifft, wird der Schaft 42 anfangen, auszuweichen, so dass die Feder 60 anfängt, zusammengedrückt zu werden, und der mittlere Teil der Feder 60 anfangen wird, sich nach vorn in Richtung auf den Werkzeugträger 12 zu verbiegen, da sich der Winkel der Oberfläche 67 relativ zur an der Feder 60 anliegenden Oberfläche 20 ändert. Wenn der Schaft 42 sich jedoch weiter nach oben bewegt, wird sich die unterste Windung 60' der Feder 60 von der Position, in der sie auf der vorderen Oberfläche 67 ruht, in eine Position verschwenken, in der sie auf der rückwärtigen Oberfläche 68 ruht, welche sich einer Haltung annähert, die im wesentlichen parallel zur oberen, an der Feder 60 anliegenden Oberfläche 20 ist, so dass die federverbiegenden Kräfte wesentlich reduziert werden. In der weitest möglich verschwenkten (ausgewichenen) Position ist die Oberfläche 68 im wesentlichen parallel zur Oberfläche 20, so dass die Windung 60' senkrecht zur Mittellinie durch die Feder 60 orientiert ist, und keine Verbiegungskräfte auf die Feder 60 wirken. Eine dauerhafte Verformung der Feder ist durch den oberen Anschlag 130 (140 in Figur 5) vermieden. Die Federhalterungs- und Anschlaganordnung optimiert daher die Effektivität der Feder 60 in der Bodenbearbeitungsposition und in der maximalen Ausweichposition und eliminiert im wesentlichen die Verbiegung der Feder und Bruchprobleme ohne Verwendung Abnutzung unterliegender Federträgerstiften oder schwenkbarer Federklammern.

## Patentansprüche

1. Halterungsanordnung (10), die zur Befestigung an einem Werkzeugträger (12) und zur Halterung eines Bodenbearbeitungswerkzeugs (56) eingerichtet ist, mit einer Klammer (14), die durch eine Klammeranordnung (82) an dem Werkzeugträger (12) befestigbar ist, einem an der Klammer (14) gelagerten und gegen die Kraft einer Feder (60) aus einer Bodenbearbeitungsposition in eine Ausweichposition nach oben schwenkbaren Schaft (42) bzw. Halterung des Schafts, der mit dem Bodenbearbeitungswerkzeug (56) verbindbar ist, wobei die Feder (60) beim Verschwenken des Schafts (42) in die Ausweichposition in einen zusammengedrückten Zustand verbracht wird, und einem oberen Anschlag (130, 140), der eine Bewegung des Schafts (42) nach oben in die Ausweichposition begrenzt und ein Zusammendrücken der Feder (60) über ihren zusammengedrückten Zustand hinaus verhindert, um eine dauerhafte Verformung der Feder zu vermeiden, wenn Hindernissen begegnet wird, **dadurch gekennzeichnet,**
**dass** der obere Anschlag (130) eine Oberfläche an der Halterung des Schafts (42) umfasst, die die Klammer (14) berührt,
**dass** der obere Anschlag (130) ein überstehendes, mit dem Schaft (42) mittelbar oder unmittelbar verbundenes Element, insbesondere einen Winkel (142) , aufweist, das einen Bereich des Werkzeugträgers (12)
in der Nähe der Klammer (14) berührt, wenn die Feder (60) ihre zusammengedrückte Stellung erreicht.

2. Halterungsanordnung (10) nach Anspruch 1, **dadurch gekennzeichnet, dass** der Schaft (42) eine Halterung insbesondere in Form eines Gussteil (30) umfasst oder an ihr befestigt ist.

3. Halterungsanordnung (10) nach Anspruch 1 oder 2, **dadurch gekennzeichnet, dass** die Klammer (14) eine an einem ersten Ende der Feder (60) anliegende Fläche (20) aufweist, und einen Schwenkbereich (18), an dem der Schaft bzw. die Halterung des Schafts (42) schwenkbar gelagert ist, und dass der Schaft (42) bzw. die Halterung des Schafts (42) eine an einem zweiten Ende der Feder (60) anliegende Fläche (66) aufweist, die sich vorzugsweise hinter dem Schwenkbereich (18) und unter der oberen, am ersten Ende der Feder (60) anliegenden Fläche (20) befindet.

4. Halterungsanordnung (10) nach einem der Ansprüche 1 bis 3, **dadurch gekennzeichnet, dass** der Schaft (42) bzw. die Halterung des Schafts (42) einen außerhalb der Windungen der Feder (60) angeordneten unteren Anschlag (40) aufweist, um eine Bewegung des werkzeugtragenden Endes des Schafts (42) unter die Bodenbearbeitungsposition zu verhindern.

5. Halterungsanordnung (10) nach einem der Ansprüche 2 bis 4, **dadurch gekennzeichnet, dass** der untere Anschlag (40) und/oder der obere Anschlag (130, 140) in die Halterung des Schafts (42) integriert ist.

6. Halterungsanordnung (10) nach einem der Ansprüche 3 bis 5, **dadurch gekennzeichnet, dass** die an der Feder (60) anliegenden Flächen (20, 66) im wesentlichen parallel sind, wenn der Schaft (42) sich in der Bodenbearbeitungsposition befindet.

7. Halterungsanordnung (10) nach Anspruch 6, **dadurch gekennzeichnet, dass** die Klammer (14) senkrechte, rückwärtige Kanten (24) aufweist, und dass die Oberfläche an der Halterung des Schafts (42) Anschläge definierende Kontaktflächen (130) an gegenüberliegenden Seiten der Halterung umfasst, die an den Kanten (24) anliegen, wenn die Feder (60) ihren zusammengedrückten Zustand erreicht.

8. Halterungsanordnung (10) nach einem der Ansprüche 4 bis 7, **gekennzeichnet durch** eine lösbare Lagerung, vorzugsweise in Form eines Hülse und Muffe aufweisenden Zusammenbaus (32), die den Schaft (42) bzw. die Halterung des Schafts (42) mit dem Schwenkbereich (18) verbindet, wobei die Feder (60) und der untere Anschlag (40) die Lagerung vorspannen, um ein Spiel im Schwenkbereich (18) zu unterbinden, wenn sich der Schaft (42) in der Bodenbearbeitungsposition befindet.

9. Halterungsanordnung (10) nach einem der Ansprüche 1 bis 8, **dadurch gekennzeichnet, dass** die Feder (60) eine Spiralfeder mit offenen Windungen ist.

## Claims

1. A holder assembly (10) adapted for mounting on a toolbar (12) and for supporting a ground working tool (56), comprising a bracket (14) which can be mounted to the toolbar (12) by a bracket arrangement (82), a shaft (42), respectively a holder of the shaft, supported on the bracket (14) and arranged to be pivoted upwardly against the force of a spring (60) from a ground working position into a tripped position, the shaft (42) being connectable to the ground working tool (56) and the spring (60) being compressed into a compressed condition when the shaft is moved into the tripped position, and comprising an upper stop (130, 140) limiting the upward movement of the shaft (42) into the tripped position to thereby prevent permanent deformation of the spring (60) when obstacles are encountered, **characterized in that** the upper stop (130) comprises a surface on the holder of the shaft (42) which contacts the bracket (42) or that the upper stop (130) comprises a projecting element directly or indirectly coupled to the shaft (42), in particular an angle (142), the projecting element contacting an area of the toolbar (12) adjacent the bracket (14) as the spring (60) reaches its compressed condition.

2. A holder assembly (10) according to claim 1, **characterized in that** the shaft (42) comprises a holder preferably in form of a casting (30), or is mounted to it.

3. A holder assembly (10) according to claim 1 or 2, **characterized in that** the bracket (14) comprises a surface (20) abutting a first end of the spring (60) and a pivot area (18) at which the shaft respectively the holder of the shaft (42) is pivotally mounted, and that the shaft (42) respectively the holder of the shaft (42) comprises a surface (66) abutting the second end of the spring (60), the surface being preferably located rearwardly of the pivot area (18) and below the upper surface (20) abutting the spring (60).

4. A holder assembly (10) according to one of claims 1 to 3, **characterized in that** the shaft (42) respectively the holder of the shaft (42) comprises a lower stop (40) outside the coils of the spring (60) for preventing movement of the tool-supporting end of the shaft (42) below the ground working position.

5. A holder assembly (10) according to one of claims 2 to 4, **characterized in that** the lower stop (40) and/or the upper stop (130, 140) is integrated into the holder of the shaft (42).

6. A holder assembly (10) according to one of claims 3 to 5, **characterized in that** the spring-abutting surfaces (20, 66) are substantially parallel when the shaft (42) is in the ground working position.

7. A holder assembly (10) according to claim 6, **characterized in that** the bracket (14) comprises upright rear edges (24) and the surface on the holder of the shaft (42) comprises contact surfaces (130) defining stops on opposite sides of the holder which abut the edges (24) when the spring (60) reaches its compressed condition.

8. A holder assembly (10) according to one of claims 4 to 7, **characterized by** a removable bearing structure connecting the shaft (42) respectively the holder of the shaft (42) with the pivot area (18), the bearing preferably comprising an assembly (32) with a bushing and a sleeve, wherein the spring (60) and the lower stop (40) bias the bearing structure to prevent looseness in the pivot area (18) when the shaft (42) is in the ground working position.

9. A holder assembly according to one of claims 1 to 8, **characterized in that** the spring (60) is a spiral spring with open coils.

## Revendications

1. Montage de fixation (10) agencé en vue de la fixation d'un outil de travail du sol (56) à un porte-outil (12) et de son maintien, du type comportant une pince (14) qui peut être fixée par un système à pince (82) au porte-outil (12), un manche (42) ou un élément de maintien du manche, monté sur la pince (14), et susceptible de basculer vers le haut, à l'encontre de la force d'un ressort (60), depuis une position de travail du sol jusqu'à une position de dégagement, et qui peut être relié à l'outil de travail du sol (56), le ressort (60) étant amené dans un état comprimé lors du basculement du manche (42) dans la position de dégagement, et une butée supérieure (130, 140) qui limite un déplacement du manche (42) vers le haut dans la position de dégagement et qui empêche une compression du ressort (60) au-delà de son état comprimé, en vue d'empêcher une déformation durable du ressort quand des obstacles sont rencontrés, **caractérisé en ce que** la butée supérieure (130) est constituée par une surface supérieure située sur l'élément de maintien du manche (42), et qui vient au contact de la pince (14), ou **en ce que** la butée supérieure (130) présente un élément en relief relié directement ou indirectement avec le manche (42), en particulier un coude (142) qui vient au contact d'une zone du porte-outil (12) au voisinage de la pince quand le ressort (60) atteint sa position comprimée.

2. Montage de fixation (10) selon la revendication 1, **caractérisé en ce que** le manche (42) comporte un élément de maintien, en particulier sous forme d'une pièce moulée (30), ou lui est fixé.

3. Montage de fixation (10) selon la revendication 1 ou 2, **caractérisé en ce que** la pince (14) présente une surface (20) reposant sur une première extrémité du ressort (60) et une zone basculante (18) montée basculable sur le manche ou l'élément de maintien du manche (42), et **en ce que** le manche ou l'élément de maintien du manche (42) présente une surface (66) reposant sur une seconde extrémité du ressort (60) qui se trouve de préférence derrière la zone basculante (18) et au-dessous de la surface supérieure (20) reposant sur la première extrémité du ressort (60).

4. Montage de fixation (10) selon l'une quelconque des revendications 1 à 3, **caractérisé en ce que** le manche (42) ou l'élément de maintien du manche (42) présente une butée inférieure (40) disposée à l'extérieur des spires du ressort (60) en vue d'empêcher un déplacement de l'extrémité du manche (42) portant l'outil au-dessous de la position de travail du sol.

5. Montage de fixation (10) selon l'une quelconque des revendications 2 à 4, **caractérisé en ce que** la butée inférieure (40) et/ou la butée supérieure (130, 140) sont intégrées dans l'élément de maintien du manche (42).

6. Montage de fixation (10) selon l'une quelconque des revendications 3 à 5, **caractérisé en ce que** les surfaces (20, 66) reposant sur le ressort (60) sont sensiblement parallèles quand le manche (42) se trouve dans la position de travail du sol.

7. Montage de fixation (10) selon la revendication 6, **caractérisé en ce que** la pince (14) présente des arêtes verticales (24) orientées vers l'arrière, et **en ce que** la surface supérieure située sur l'élément de maintien du manche (42) forme, sur les côtés opposés de l'élément de maintien, des surfaces de contact (130) définissant des butées qui reposent sur les arêtes (24) quand le ressort atteint son état comprimé.

8. Montage de fixation (10) selon l'une quelconque des revendications 4 à 7, **caractérisé par** une configuration amovible, de préférence sous forme d'un ensemble (32) comportant une douille et un manchon, qui relie le manche (42) ou l'élément de maintien du manche (42) avec la zone basculante (18), le ressort (60) et la butée inférieure (40) précontraignant la configuration en vue d'entraver tout jeu dans la zone basculante (18) quand le manche (42) se trouve dans la position de travail du sol.

9. Montage de fixation (10) selon l'une quelconque des revendications 1 à 8, **caractérisé en ce que** le ressort (60) est un ressort spiral à spires ouvertes.
